# EUROPEAN PATENT APPLICATION

(11) **EP 2 664 825 A1**
(43) Date of publication of application: **20.11.2013**
(21) Application number: 12833944.7
(22) Date of filing: 20.09.2012
(51) Int. Cl.: F16H 63/34

(54) **DEVICE FOR PREVENTING ERRONEOUS OPERATION OF MANUAL TRANSMISSION**

(30) Priority: 20.09.2011 JP 2011204506
(71) Applicant: Aisin AI Co., Ltd., Nishio-shi, Aichi 445-0006 (JP)
(72) Inventor: ISHIDA, Takahiro, Aichi 4450006 (JP); YAMADA, Takafumi, Aichi 4450006 (JP); ICHIKAWA, Masaya, Aichi 4450006 (JP); NITTA, Yasuhiro, Aichi 4450006 (JP)
(74) Representative: RACKETTE Partnerschaft Patentanwälte
(86) International application number: PCT/JP2012/074047
(87) International publication number: WO 2013/042722

(57) **Abstract**

A restricting pin 36 is provided so as to be slidable in a moving direction of a front end 27a of a reverse restricting member 27 provided at a select lever 20 for selecting forward and reverse fork shafts 12 to 15 switching a shift gear(s), and is biased toward the reverse restricting member. A lockout lever 30 that can be inserted into/detached from between the restricting pin and the front end of the reverse restricting member is biased toward an insertion side by a spring 33, and at a vehicle speed less than a predetermined vehicle speed. A front end of an advancing operating rod 40a of the actuator 40 contacts and is detached against the force of the spring 33. At a vehicle speed not less than a predetermined vehicle speed, the front end of the reverse restricting member contacts the inserted lockout lever, thereby preventing the select lever from moving to a reverse select position.

## Description

### TECHNICAL FIELD

### [Description of Related Application]

The present invention is based on claim for priority of Japanese Patent Application No. 2011-204506 (filed on September 20, 2011), entire contents of which are incorporated herein by reference. The present invention relates to a misoperation preventing device for preventing a gear shift operation to a reverse gear during forward travelling at high speed in a manual transmission of an automobile and the like.

### BACKGROUND ART

In a manual transmission in automobile and the like, a gear shift operation to a reverse gear during forward travelling at high speed disadvantageously causes strong gear rattle. For example, Patent Literature (PLT) 1 discloses a misoperation preventing device for preventing such problem. This device includes a select cam rotated to a plurality of forward positions and a reverse position that correspond to a plurality of forward select positions and a reverse select position, respectively, in cooperation with a manual select operation; a restricting cam rotatably supported between a position at which the restricting cam is engaged with the select cam and a position at which the restricting cam is disengaged from the select cam, the restricting cam being biased toward the disengaged position by a torsion coil spring; and a solenoid for biasing the restricting cam toward an engagement position against a biasing force of the torsion coil spring. By energizing the solenoid at a vehicle speed not less than a predetermined vehicle speed to cause the restricting cam to engage with the select cam against the biasing force of the torsion coil spring, the select cam is restricted from rotating to the reverse position to prevent a gear shift operation to a reverse gear.

### CITATION LISTS

### PATENT LITERATURE

Patent Literature 1: Japanese Patent No. 3,908,484 (paragraph [0030], paragraph [0058], Fig. 5)

### SUMMARY

### TECHNICAL PROBLEMS

Disclosure in the above-mentioned Patent Literature is incorporated herein by reference.
Following analysis is made by the present inventors.
In Patent Literature 1, since a restricting cam is biased toward the disengaged position by the spring at all times, and the solenoid is energized at a vehicle speed not less than the predetermined vehicle speed to cause the restricting cam to engage with the select cam, when a failure such as break occurs in the solenoid, even at the vehicle speed not less than the predetermined vehicle, the restricting cam is not engaged with the select cam. Accordingly, at a vehicle speed not less than a predetermined vehicle speed, the function of preventing the gear shift operation to the reverse gear is lost counted as a problem. To solve this problem, one might consider as follows: The restricting cam is biased toward the position at which the restricting cam is engaged with the select cam by the spring at all times, and the solenoid is energized at a vehicle speed less than a predetermined vehicle speed to disengage the restricting cam from the select cam, thereby allowing the select cam to rotate to the reverse position, while the solenoid is not energized at a vehicle speed not less than a predetermined vehicle speed so as to engage the restricting cam with the select cam, thereby preventing the select cam from rotating in the reverse position, which prevents the gear shift operation to the reverse gear. However, in such a formulation, when a failure such as break occurs in the solenoid, the restricting cam remains engaged with the select cam by the spring. As a result, the gear shift operation to the reverse gear cannot be performed irrespective of the vehicle speed. It is desired to solve these problems preferably at the same time.

### SOLUTION TO PROBLEM

According to a first aspect of the present invention, a misoperation preventing device is used in a vehicle manual transmission comprising a plurality of forward fork shafts arranged in parallel with each other, each forward fork shaft switching a respective forward shift gear, and a reverse fork shaft switching a reverse shift gear; a select lever sequentially selecting one of the forward and reverse fork shafts in cooperation with a select motion of a manual change lever, the select lever being moved between select positions; and a casing for supporting each of such members, wherein the fork shaft selected by the select lever is activated in cooperation with a shift motion of the manual change lever to switch between forward and reverse gears. In the transmission, the misoperation preventing device comprises: a reverse restricting member moved in relation to the select lever, the reverse restricting member having a front end that gets closest to a part of an inner surface of the casing when the select lever is located at a reverse select position at which the reverse fork shaft is selected, and is sequentially separated from the part of the inner surface when the select lever is sequentially moved to each of other select positions; a restricting pin engaged with the part of the inner surface of the casing so as to be slidable along a tangential direction of a movement track of the front end of the reverse restricting member in the vicinity of the position closest to the part, the restricting pin being elastically biased toward the front end of the reverse restricting member and partially contacting a part of the casing in a free state to be stopped; and a lockout lever supported by the casing so as to be rotatable around a supporting pin extending parallel to the restricting pin and axially slidable, the lockout lever extending orthogonal to the supporting pin and being biased around the supporting pin by a spring interposed between the lockout lever and the casing; wherein in a state where the select lever is not located at the reverse select position, a front end part of the lockout lever biased by the spring is configured to be inserted between the front end of the reverse restricting member and a front end surface of the restricting pin in a free state at least near the restricting pin; and the misoperation preventing device further comprises an actuator having an operating rod that can detachably contact with a part of the lockout lever; the actuator being actuated at a speed less than a predetermined vehicle speed to cause the operating rod to contact with the part of the lockout lever and the front end part of the lockout lever to be disengaged from a position between the front end of the reverse restricting member and the front end surface of the restricting pin in the free state against a biasing force of the spring (Mode 1).

The misoperation preventing device further comprises: a shift and select shaft arranged in parallel with each of the fork shafts, the shift and select shaft being selected in a rotational direction and axially shifted in cooperation with select motion and shift motion of the change lever; wherein the select lever is fixed to the shift and select shaft so as to protrude radially, each of the fork shafts is axially shifted, front ends of shift pieces protruding radially are located on an arc centered at the shift and select shaft, and in case where each of the fork shaft is located at a neutral position in the shift direction, U-shaped notches formed in respective front ends of the shaft pieces are aligned along the arc, and are selectively engageable with the front end of the select lever swinging in the select direction, and the reverse restricting member is fixed to the shift and select shaft (Mode 2).

Preferably, the misoperation preventing device further comprises: a cylinder part formed integrally with the select lever, so as to extend radially; a piston member engaged with an inner surface of the cylinder part so as to be slidable axially; a roller rotatably supported by a front end of the piston member, which protrudes from the cylinder part, via a pivoted pin lying parallel to the shift and select shaft; a plate-like cam plate that has one end rotatably supported by the shift and select shaft, extends radially, has a central surface in a thickness direction arranged so as to substantially correspond to a center line of the cylinder part, and an opening for swingingly accommodating the cylinder part, the piston member, and the roller, and is engaged with the casing so as to allow only the movement along the shift and select shaft; and a spring for biasing the piston member outward relative to the cylinder part and elastically pressing the roller onto a cam surface formed in the opening on the opposite side to the shift and select shaft; wherein the cam surface has a largest distance from a center of the shift and select shaft at a neutral position in the select direction, which is located in the moving range of the roller, and has opposed inclined angles on the both sides across the neutral position, and the reverse restricting member is formed integrally with the cylinder part (Mode 3).

According to a second aspect of the present invention, a misoperation preventing device is used in a transmission for switching between forward movement and reverse movement by operation of the select lever. In the transmission, the misoperation preventing device comprises a reverse restricting member swinging integrally with the select lever; an actuator selectively allowed to actuate according to vehicle speed at forward select; an operating rod operated by driving of the actuator against an elastic force; a restricting pin supported so as to freely move forward or rearward while receiving the elastic force acting in a forward direction; and a lockout lever supported so as to be movable in the forward and rearward direction of the restricting pin, the lockout lever freely swinging around the swinging axis extending parallel to the forward and rearward direction of the restricting pin at least between a first position and a second position.
At the first position, the lockout lever is inserted between the restricting pin and the reverse restricting member so as to be in slide contact with the pin and the member, and the select lever that selects rearward movement can be coupled to the restricting pin via the reverse restricting member and be biased by the operated operating rod. At the second position, the lockout lever is biased by the operating rod to swing from the first position, thereby being detached from a position between the restricting pin and the reverse restricting member (Mode 4).

A third aspect of the present invention provides a transmission including the misoperation preventing device according to the present invention (Mode 5).

### ADVANTEGEOUS EFFECTS OF INVENTION

According to a first aspect (Mode 1), the misoperation preventing device includes a reverse restricting member moved in relation to the select lever, the reverse restricting member having a front end that gets closest to a part of an inner surface of the casing when the select lever is located at a reverse select position at which the reverse fork shaft is selected, and is sequentially separated from the part of the inner surface when the select lever is sequentially moved to each of other select positions; a restricting pin engaged with the part of the inner surface of the casing so as to be slidable along a tangent direction of a movement track of the front end of the reverse restricting member in the vicinity of the position closest to the part, the restricting pin being elastically biased toward the front end of the reverse restricting member and partially contacting a part of the casing in a free state to be stopped; and a lockout lever supported by the casing so as to be rotatable around a supporting pin extending parallel to the restricting pin and axially slidable, the lockout lever extending orthogonal to the supporting pin and being biased around the supporting pin by a spring interposed between the lockout lever and the casing; wherein in a state where the select lever is not located at the reverse select position, a front end part of the lockout lever biased by the spring is configured to be inserted between the front end of the reverse restricting member and the front end surface of the restricting pin in the free state at least near the restricting pin, and the misoperation preventing device further includes an actuator having an operating rod that can detachably contact with a part of the lockout lever; and an actuator being actuated at a vehicle speed less than a predetermined vehicle speed to cause the operating rod to contact with the part of the lockout lever and the front end of the lockout lever to be detached from a position between the front end of the reverse restricting member and the front end surface of the restricting pin in the free state against a biasing force of the spring. Therefore, in the state where the select lever is not located at the reverse select position, and the vehicle is travelling forward at a vehicle speed not less than the predetermined vehicle, the front end of the lockout lever biased by the spring is inserted near the restricting pin between the front end of the reverse restricting member and the front end surface of the restricting pin in the free state. When it is attempted to select the reverse fork shaft by use of the select lever in this state to shift the change lever to the reverse select position, the front end of the lockout lever is pressed and moved by the front end of the reverse restricting member, and comes into contact with the front end surface of the elastically biased restricting pin, resulting in that the operating force occurring in the change lever rapidly increases. Thereby, the user can immediately recognize the misoperation that the gear shift operation to the reverse gear is performed during forward travelling at a vehicle speed not less than a predetermined vehicle speed, and stop a further operation.

On the other hand, when the vehicle is travelling forward at a vehicle speed less than the predetermined vehicle speed, the actuator is actuated, thereby causing the operating rod to press a part of the lockout lever and rotate the lockout lever around the supporting pin against the biasing force of the spring, so that the front end part of the lock lever is moved rearward from a position between the front end of the reverse restricting member and the restricting pin. When the change lever is shifted to the reverse select position in this state, the front end of the reverse restricting member gets close to the restricting pin, but does not come into contact with the restricting pin and therefore, the reverse fork shaft can be easily selected by the select lever and then, the change lever can be shifted to set the reverse shift gear.

In a case where the operating rod cannot be moved at the reverse position due to a failure such as break of the actuator, even when the vehicle is travelling forward at a vehicle speed less than the predetermined vehicle speed, the operating rod does not press a part of the select lever and therefore, the front end part of the lockout lever is not moved rearward from the position between the front end of the reverse restricting member and the restricting pin. In this case, as in the case where the change lever is operated to allow the select lever to select the reverse fork shaft at a vehicle speed not less than the predetermined vehicle speed, the front end of the reverse restricting member comes into contact with the front end surface of the restricting pin via the front end part of the lockout lever and the operating force occurring in the change lever rapidly increases. Thus, the gear shift operation to the reverse gear cannot be achieved with a small operating force. However, by increasing the operating force applied to the change lever in the select direction, the biasing means of the restricting pin is bent to move the select lever, thereby selecting the reverse fork shaft. Thus, the gear shift operation to the reverse gear can be performed with a large force, that is, without obstacling the gear shift operation into the reverse gear.

In the first aspect (Mode 1), according to Mode 2, the misoperation preventing device further includes a shift and select shaft arranged in parallel with each of the fork shafts, the shift and select shaft being selected in the rotational direction and shifted in the axial direction in cooperation with the select motion and the shift motion of the change lever, the select lever is fixed to the shift and select shaft so as to protrude in the radial direction, each of the fork shafts is shifted in the axial direction, front ends of shift pieces protruding in the radial direction are located on an arc centered at the shift and select shaft, and in the case where each of the fork shafts is located at the neutral position in the shift direction, U-shaped notches formed in the respective front ends of the shaft pieces are alinged along the arc, and are selectively engageable with the front end of the select lever swinging in the select direction, and the reverse restricting member is fixed to the shift and select shaft. In the misoperation preventing device, since both of the select lever for activating the fork shaft and the reverse restricting member for restricting the gear shift operation to the reverse gear at a vehicle speed not less than the predetermined vehicle speed during forward travelling are fixed to the shift and select shaft, it is possible to obtain the misoperation preventing device in the manual transmission, which has a simplified configuration and can reliably operate.

In Mode 2, according to Mode 3, the misoperation preventing device further includes a cylinder part formed integrally with the select lever, the cylinder part extending in the radial direction; a piston member engaged with an inner surface of the cylinder part so as to be slidable in the axial direction; a roller rotatably supported by a front end of the piston member, which protrudes from the cylinder part, via a pivoted pin lying parallel to the shift and select shaft; a plate-like cam plate that has one end rotatably supported by the shift and select shaft, extends in the radial direction, has a central surface in the thickness direction arranged so as to substantially correspond to the center line of the cylinder part, and an opening for swingingly accommodating the cylinder part, the piston member, and the roller, and is engaged with the casing so as to allow only the movement along the shift and select shaft; and a spring for biasing the piston member outward relative to the cylinder part and elastically pressing the roller onto a cam surface formed in the opening on the opposite side to the shift and select shaft, the cam surface has the largest distance from the center of the shift and select shaft at the neutral position in the select direction, which is located in the moving range of the roller, and has opposed inclined angles on the both sides across the neutral position, and the reverse restricting member is formed integrally with the cylinder part. With such configuration, since the three members: the select lever, the cylinder part, and the reverse restricting member are integerated and fixed to the shift and select shaft, it is possible to further reduce the number of components, and to obtain the misoperation preventing device in the manual transmission, which can operate more reliably.

According to a second aspect of the present invention (Mode 4), for example, in the case where the vehicle speed is low at forward select, the actuator is allowed to actuate. By the actuation of the actuator, the lockout lever is located at the second position, and the elastic force acting on the restricting pin is not transmitted to the select lever. Therefore, a large resistance force against the reward select operation of the select lever does not occur.
On the contrary, for example, in the case where the vehicle speed is high at forward select, the actuator is not allowed to actuate, and the lockout lever is located at the first position. In this state, when the select lever is shifted to the reverse select position, the elastic force acting on the restricting pin is transmitted to the select lever via the lockout lever and the reverse restricting member. Thereby, a large resistance force against the reward select operation of the select lever occurs, resulting in that the operator detects that the reverse select operation is a misoperation.
In the case of a failure of the actuator, even when forward movement is selected and the vehicle speed is low, the actuator cannot bias the lockout lever from the first position to the second position, and the lockout lever is held at the first position. However, by increasing the operating force of the select lever, the restricting pin is moved rearward, thereby swinging the select lever toward the reverse select position. That is, even in the case of failure, the gear shift operation to the reverse gear is not disabled.

### BRIEF DESCRIPTION OF THE DRAWINGS

Fig. 1 is a side view showing an overall configuration of an exemplary embodiment of a misoperation preventing device in a manual transmission according to the present invention.
Fig. 2 is a sectional view taken along line 2-2 in Fig. 1.
Fig. 3 is a view showing a shift pattern of the transmission according to the present invention.
Fig. 4 is a sectional view taken along line 4-4 in Fig. 1.
Fig. 5 is a sectional view taken along line 5-5 in Fig. 4.
Fig. 6 is a sectional view taken along line 6-6 in Fig. 5.
Fig. 7 is a view for describing the operation of the exemplary embodiment shown in Fig. 1.

### MODES FOR CARRYING OUT THE INVENTION

An exemplary embodiment of a misoperation preventing device of a manual transmission according to the present invention will be described below with reference to the accompanying drawings. Reference numerals in the drawings in summary and an exemplary embodiment (example) are only examples for assisting understanding of the present invention, and do not intend to limit the present invention to the shown modes.

### EXAMPLES

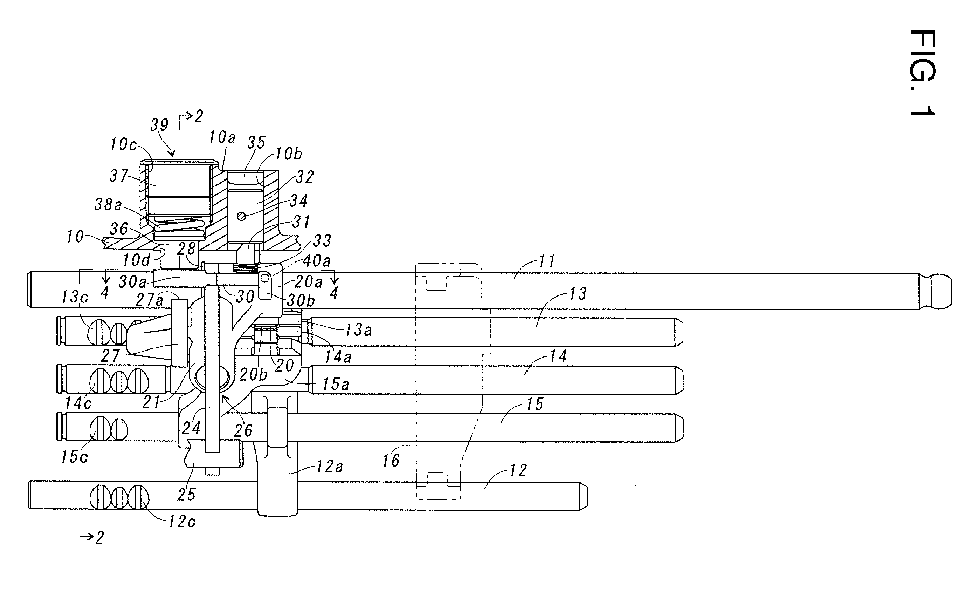

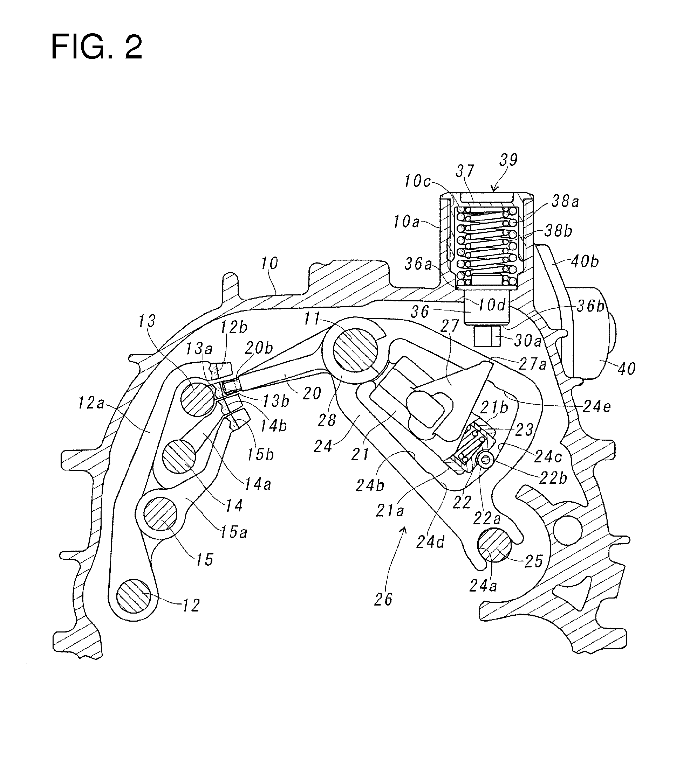

First, an entire configuration of a manual transmission to which the present invention is applied will be described with reference to Fig. 1 and Fig. 2. A shift and select shaft 11 is supported by a casing 10 of the manual transmission so as to be rotatable and slidable in an axial direction, and three forward fork shafts 12 to 14 and one reverse fork shaft 15 parallel to the shift and select shaft 11 are supported so as to be slidable in the axial direction. In this exemplary embodiment, in cooperation with a select motion and a shift motion of a manual change lever (not shown), a select motion in a rotational direction and a shift motion in the axial direction is applied to the shift and select shaft 11, a select lever 20 protruding in a radial direction is fixed to the shift and select shaft 11, each of the fork shafts 12 to 15 is selected by the select motion in a swinging direction of the select lever 20 and is subjected to the shift motion between a neutral position in the axial direction and a shift position as one or both sides of the neutral position, and known gear shift is performed via a shift fork 16 (only one is represented by a two-dot chain line). Ball lock means (only notches are represented as reference numerals 12c to 15c) that each is formed of a lock ball, a spring, and a notch, and lock each of the fork shafts 12 to 15 at its neutral position in a shift direction and a shift position are provided between the fork shafts 12 to 15 and the casing 10.

As shown in Fig. 1 and Fig. 2, the select lever 20 is shaped like a tapered bar reinforced with a rib, is formed integrally with a boss 20a bolted to the shift and select shaft 11, and protrudes in the radial direction of the boss 20a from a position shifted to the right in the axial direction in Fig. 1. A front end 20b is shaped like a square bar having four chamfered corners. The shift pieces 12a to 15a are integrally fixed to the fork shafts 12 to 15, respectively, at their bottom ends, and protrude in the radial direction in parallel with one another. Their front ends are located on an arc having the shift and select shaft 11 as the center near the select lever 20, and the shift piece 15a of the reverse fork shaft 15 is located at one end of the arc (lower side in Fig. 2). U(Japanese Katakana " 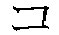 "(KO))-like notches 12b to 15b formed at respective front ends of the shift pieces 12a to 15a are aligned along the above-mentioned arc in the state where the fork shafts 12 to 15 are located at the neutral position in the shift direction, and can selectively engage with the front end 20b of the select lever 20 swinging in a select direction.

In this manual transmission, the select motion and the shift motion of the manual gear change lever (termed as "change lever" herein) are transmitted to the select lever 20 via the shift and select shaft 11, first, the front end 20b is moved into the notches 12b to 15b at the front ends of the shift pieces 12a to 15b located at the neutral position in the shift direction by the select motion of the select lever 20 in the swinging direction, and selects one of the notches 12b to 15b and then, shifts the fork shaft selected in the shift motion of the select lever 20 in the axial direction to switch a shift gear.

A select return means 26 elastically biasing the select lever 20 toward the neutral position in the select direction includes, as shown in Fig. 1 and Fig. 2, a cylinder part 21, a piston member 22, a roller 22a, a spring 23, and a cam plate 24. The cylinder part 21 is formed integrally with the boss 20a of the select lever 20, and protrudes from an eccentric position on an axially opposite side to the boss 20a of the select lever 20 (left side in the axial direction in Fig. 1) in the radial direction, and a circumferential phase difference between the protruding cylinder part 21 and the select lever 20 is about 124 degrees. On the inner surface of the cylinder part 21, the piston member 22 is prevented from rotating about the axis line in the longitudinal direction, is slidable in the longitudinal direction, and is biased outward in the radial direction by the spring 23 provided between the piston member 22 and an inner bottom surface of the cylinder part 21. The roller 22a is rotatably supported by a bifurcated part formed at a front end of the piston member 22 protruding from the cylinder part 21 radially outward by a pivoted pin 22b disposed parallel to the shift and select shaft 11.

The camplate 24 is shaped like a thick plate having a uniform thickness, which is press-molded by punching, is rotatably supported by the shift and select shaft 11 at one end, comes into contact with an end surface of the boss 20a secured by a screw to the select lever 20 on the side of the cylinder part 21, and is held by a stopper ring 28, thereby being prevented from falling off. The cam plate 24 radially extends from one end supported by the shift and select shaft 11, has a central plane in the thickness direction, which is arranged so as to substantially correspond to the center line of the cylinder part 21, and has an opening 24b for accommodating the cylinder part 21, the piston member 22, and the roller 22a so as to be relatively swingable. The cam plate 24 has a U-like engaging recess 24a opened to the radial outside on an opposite side to the shift and select shaft 11. An anti-rotational pin 25 fixed to the casing 10 parallel to the shift and select shaft 11 is engaged with the engaging recess 24a, and the cam plate 24 is retained to the casing 10 so as to be restrained from rotating around the shift and select shaft 11 and allowed to move along a direction of the shift and select shaft 11.

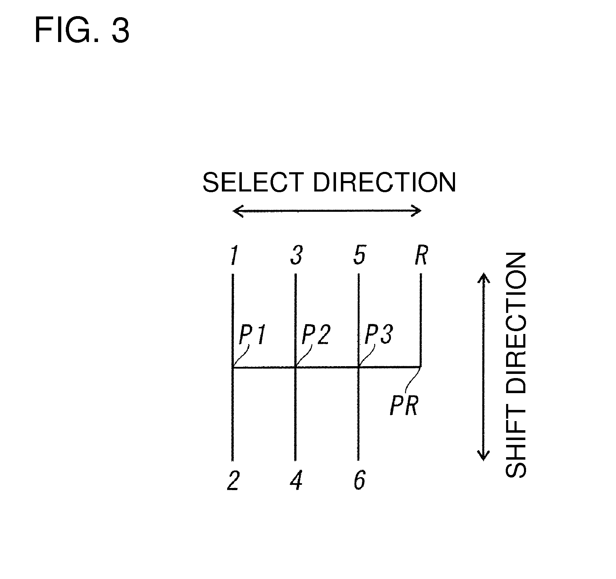

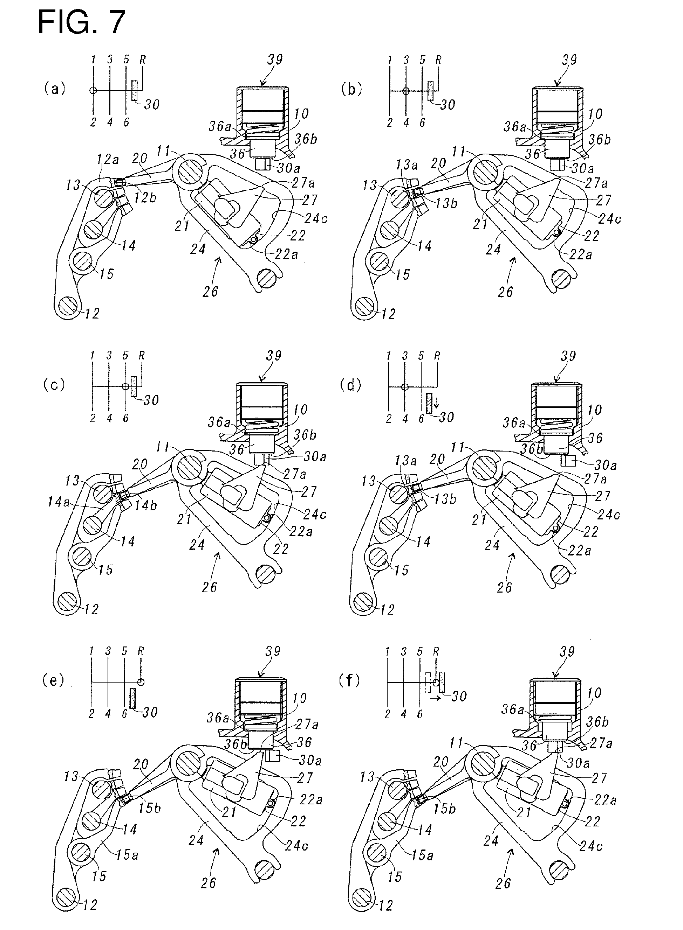

As shown in Fig. 2, a cam surface 24c is formed on the opening 24b of the cam plate 24 on the opposite side to the shift and select shaft 11, and the roller 22a provided at the front end of the piston member 22 biased by the spring 23 is elastically pressed onto the cam surface 24c. The manual transmission in this exemplary embodiment has a shift pattern of forward 6-speeds and reverse 1-speed as shown in Fig. 3, and as shown in Fig. 2 and Fig. 7, the roller 22a is moved between both end positions (a 1-2 speed select position P1 and a reverse select position PR of the shift pattern) on the cam surface 24c, and a 3-4 speed select position (neutral position) P2 and a 5-6 speed select position P3 are located in the moving range. On the cam surface 24c, the distance from the center of the shift and select shaft 11 is the largest at the neutral position P2, and inclined angles on both sides of the neutral position P2 are inverted each other. Thereby, the select lever 20 is biased relative to the cam plate 24 toward the neutral position in the select direction.

In the manual transmission, in the state where the change lever is not operated, as shown in (b) of Fig. 7, the change lever is located at the neutral position (3-4 speed select position) P2 in the select direction represented by the circle symbol ○ in the shift pattern (refer to Fig. 3) and the neutral position in the shift direction, and the front end 20b of the select lever 20 is engaged with the notch 13b at the front end of the shift piece 13a of the second fork shaft 13. When the change lever is shifted to one or the other side in the shift direction in this state, the select lever 20 is moved to one or the other side in the axial direction along the shift and select shaft 11, and the second fork shaft 13 is also moved in the same direction and locked by the ball lock means to set a 3-speed gear or a 4-speed gear via the shift fork 16.

When the change lever is moved from the neutral position P2 represented by the circle symbol ○ in the shift pattern in (b) of Fig. 7 to the 1-2 speed select position P1 represented by the circle symbol ○ in the shift pattern in (a) of Fig. 7 (refer to Fig. 3), the front end 20b of the select lever 20 is engaged with the notch 12b at the front end of the shift piece 12a of the first fork shaft 12, and a contact part 21a of the cylinder part 21 comes into contact with a stopper surface 24d of the opening 24b of the cam plate 24, thereby preventing further select rotation. When the change lever is shifted to one or the other side in the shift direction in this state, as described above, the select lever 20 is moved to one or the other side in the axial direction, and the first fork shaft 12 is also moved in the same direction and locked by the ball lock means to set a 1-speed gear or a 2-speed gear.

When the change lever is moved from the neutral position P2 to the 5-6 speed select position P3 represented by the circle symbol ○ in the shift pattern in (c) of Fig. 7 (refer to Fig. 3), as described above, the front end 20b of the select lever 20 is engaged with the notch 14b at the front end of the shift piece 14a of the third fork shaft 14, and when the change lever is moved to one or the other side in the shift direction, the third fork shaft 14 sets a 5-speed gear or a 6-speed gear.

When the change lever is moved from the 5-6 speed select position P3 to the reverse select position PR represented by the circle symbol ○ in the shift pattern in (e) or (f) of Fig. 7 (refer to Fig. 3), the front end 20b of the select lever 20 is engaged with the notch 15b at the front end of the shift piece 15a of the reverse fork shaft 15, and a contact part 21b of the cylinder part 21 comes into contact with a stopper surface 24e of the cam plate 24, thereby preventing further select rotation. When the change lever is shifted to one side in the shift direction in this state, as described above, the select lever 20 is moved to one side in the axial direction, and the reverse fork shaft 15 is also moved in the same direction to set a reverse gear.

Next, the misoperation preventing device as a main part of the present invention will be described. The misoperation preventing device, as shown in Fig. 1, Fig. 2, Fig. 4, and Fig. 5, includes a reverse restricting member 27 provided integrally with the cylinder part 21 of the select return means 26 for returning the select lever 20 to the neutral position in the select direction, a restricting pin 36 provided in the casing 10, a biasing means 39 for biasing the restricting pin 36, a lockout lever 30, and an actuator 40 for actuating the lockout lever 30. The reverse restricting member 27, as shown in mainly Fig. 1 and Fig. 2, protrudes from a side of the cylinder part 21 formed integrally with the select lever 20 fixed to the shift and select shaft 11, and swings between the above-mentioned select positions together with the select lever 20. A front end 27a protruding from the reverse restricting member 27 in the circumferential direction centered at the shift and select shaft 11 is at a position closest to a part of the inner surface of the casing 10 at the reverse select position PR at which the front end 20b of the select lever 20 engages with the notch 15b of the shift piece 15a of the reverse fork shaft 15 (refer to (e) of Fig. 7 and (f) of Fig. 7), and is sequentially away from the part of the inner surface of the casing 10 at the remaining select positions P1 to P3 (refer to (a) to (c) of Fig. 7).

As shown in mainly Fig. 1 and Fig. 2, the part of the inner surface of the casing 10 to which the front end 27a of the reverse restricting member 27 is closest at the reverse select position PR is substantially orthogonal to a tangential line of an arcuate trace of the front end 27a around the shift and select shaft 11 at the position closest to the part of the inner surface. The part of the inner surface has a holding hole 10d around the tangential line as the center, and a boss part 10a protruding from the casing 10 outer from the holding hole 10d has a coaxial screw hole 10c having a larger diameter than the holding hole 10d. The circular restricting pin 36 having a flange 36a in its rear part is fitted into the holding hole 10d so as to be slidable in the axial direction, and the restricting pin 36 is elastically biased toward the front end 27a of the reverse restricting member 27 by large and small springs 38a, 38b interposed between the restricting pin 36 and an inner bottom surface of a cup-like screw plug 37 screwed into the screw hole 10c, and in a free state, the flange 36a comes into contact with a bottom surface of the screw hole 10c and is stopped. The screw plug 37 and the springs 38a, 38b constitute the biasing means 39 that elastically biases the restricting pin 36 toward the front end 27a of the reverse restricting member 27. In this free state, a front end surface 36b of the restricting pin 36 protrudes inward from the inner surface of the casing 10 by a predetermined distance. The front end 27a of the reverse restricting member 27 is at a position closest to the part of the inner surface of the casing 10 at the reverse select position PR, but is somewhat separated from the front end surface 36b of the restricting pin 36 in the free state (refer to (e) of Fig. 7).

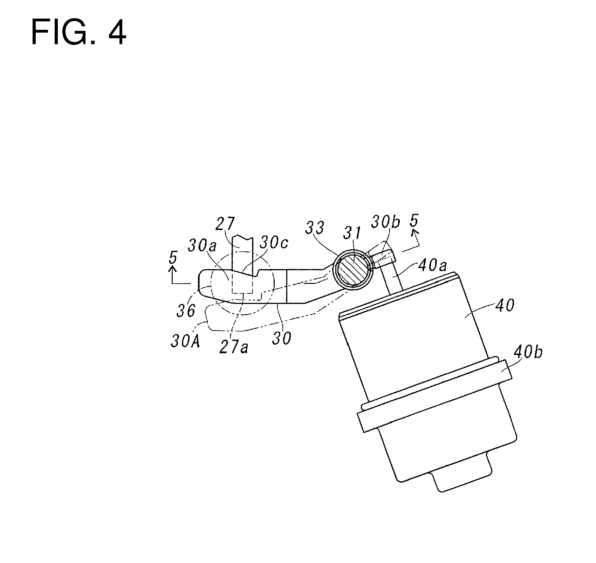

The boss part 10a of the casing 10 on which the holding hole 10d is formed has a substantially pot (or cup) -like cross section and as shown in Fig. 4 to Fig. 6, a supporting cylindrical member 32 is fitted into a supporting hole 10b formed in the casing 10 parallel to the holding hole 10d holding (receiving) the restricting pin 36. The lockout lever 30 is formed integrally with a supporting pin 31 supported by the supporting cylindrical member 32 so as to be rotatable and slidable in the axial direction, and extends in a direction orthogonal to the supporting pin 31. A substantially rectangular small contact piece 30b protruding from the supporting pin 31 to the opposite (rear) end is formed integrally with an end of the lockout lever 30 on the opposite side to a front end 30a. A large recessed (cut-out) part 31a is formed on one side of an axially middle portion of the supporting pin 31 except for a thin disc-like front end 31b.

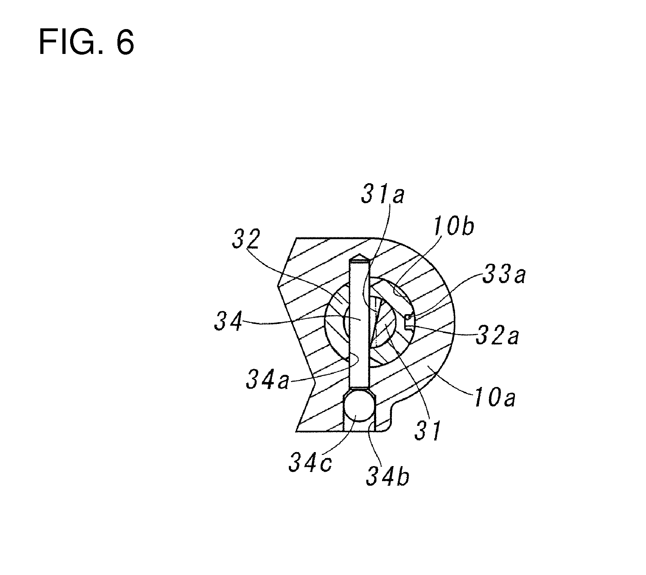

As shown in Fig. 6, the supporting cylindrical member 32 is fixed to the casing 10 by inserting a fixing pin 34 into a pin hole 34a passing through the boss part 10a and the supporting cylindrical member 32, and the fixing pin 34 is prevented from falling off by pressing a lock ball 34c into a large-diameter part 34b at an outer end of the pin hole 34a. The fixing pin 34 passes through the recessed part 31a with a sufficient margin. Accordingly, the lockout lever 30 and the supporting pin 31 is rotatable in an angle range in which both edges of a bottom surface of the recessed part 31a comes into contact the fixing pin 34, and is slidable in the axial direction up to a position inner from a furthest protruded position at which the front end 31b comes into contact with the fixing pin 34. At the furthest protruded position, a slight gap is left between the front end 30a of the lockout lever 30, which is slightly larger than a bottom end, and the front end surface 36b of the restricting pin 36 in the free state. The supporting hole 10b is closed by pressing a cover member 35 into the supporting hole 10b.

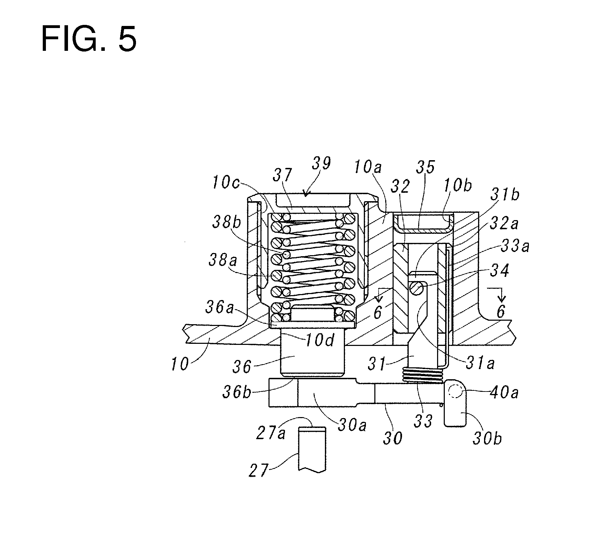

One end of a torsion spring 33 wound around a bottom end of the supporting pin 31 with a slight gap is hung on the bottom end of the lockout lever 30, and a leg 33a extending from the other end in parallel with the supporting pin 31 is inserted into a groove 32a axially formed in a part of the outer circumference of the supporting cylindrical member 32. Thereby, the lockout lever 30 is elastically biased around the supporting pin 31 in the clockwise direction in Fig. 4, at the select positions P1 to P3 except for the reverse select position PR at which the front end 27a of the reverse restricting member 27 is at a position closest to the inner surface of the casing 10 (accordingly, the front end 27a is closest to the front end surface 36b of the restricting pin 36 in the free state), as represented by solid lines in Fig. 4 and Fig. 5, the front end 30a of the lockout lever 30 is inserted between the front end 27a of the reverse restricting member 27 and the front end surface 36b of the restricting pin 36 in the free state, with a slight gap from the front end surface 36b of the restricting pin 36 in the free state, and is stopped at a position at which one edge of a bottom surface of the recessed part 31a of the supporting pin 31 comes into contact with the fixing pin 34. The front end 30a of the lockout lever 30 has a triangular notch 30c at a position corresponding to the front end 27a of the reverse restricting member 27 when viewed in the axial direction of the restricting pin 36.

The actuator 40 is a solenoid having an operating rod 40a that is moved backward by a spring (not shown) during non-energization, and is moved forward against the biasing force of the spring during energization, and is attached to the casing 10 via the flange 34b. As described above, in the case where the lockout lever 30 is located at any of the select positions P1 to P3 except for the reverse select position PR, unless the actuator 40 is energized, the operating rod 40a is moved backward. Therefore, the front end 30a of the lockout lever 30 biased by the torsion spring 33 is inserted between the front end 27a of the reverse restricting member 27 and the front end surface 36b of the restricting pin 36 in the free state (refer to 30a in Fig. 4, first position). However, when the actuator 40 is energized to cause the operating rod 40a to move forward, and the front end of the rod comes into contact with the contact piece 30b, thereby rotating the lockout lever 30 against the biasing force of the torsion spring 33, the front end 30a of the lockout lever 30 is detached from (the contacted position) between the front end 27a of the reverse restricting member 27 and the front end surface 36b of the restricting pin 36 in the free state (refer to a two-dot chain line 30A in Fig. 4, second position). The triangular notch 30c of the front end 30a is provided to reliably detach the front end 30a of the lockout lever 30 from the front end 27a of the reverse restricting member 27. The actuator 40 is energized at a vehicle speed less than a predetermined vehicle speed to cause the operating rod 40a to move forward, and is not energized at a vehicle speed not less than the predetermined vehicle speed to cause the operating rod 40a to move backward.

Next, the operation of the above-mentioned exemplary embodiment will be described with reference to Fig. 7. In the case where the change lever is located at the 1-2 speed select position P1 shown in (a) of Fig. 7, the front end 20b of the select lever 20 is engaged with the notch 12b at the front end of the shift piece 12a of the first fork shaft 12. When the change lever is shifted to one or the other side in the shift direction in this state, as described above, the 1-speed gear or the 2-speed gear is set. When the vehicle is traveling at a vehicle speed not less than a predetermined vehicle speed in this state, the actuator 40 is not energized and therefore, the operating rod 40a does not press the contact piece 30b of the lockout lever 30. Thus, the front end 30a of the lockout lever 30 biased by the torsion spring 33, as described above, is inserted between the front end 27a of the reverse restricting member 27 and the front end surface 36b of the restricting pin 36 in the free state, and is stopped. In this state, although a gap between the front end 30a of the lockout lever 30 and the front end surface 36b of the restricting pin 36 is small, a distance between the front end 30a and the front end 27a of the reverse restricting member 27 is relatively large.

When it is attempted that the change lever is shifted to the reverse select position PR at which the front end 20b of the select lever 20 is engaged with the notch 15b of the shift piece 15a of the reverse fork shaft 15 (refer to (e) and (f) of Fig. 7), the front end 27a of the reverse restricting member 27 gets closer to the front end 30a as the front end 20b of the select lever 20 becomes closer to the notch 15b of the reverse fork shaft 15 (refer to (c) of Fig. 7), and immediately before the front end 20b of the select lever 20 is engaged with the notch 15b, the front end 27a of the reverse restricting member 27 comes into contact with the front end 30a of the lockout lever 30, thereby moving the front end 30a in the axial direction of the supporting pin 31. Since the front end 30a immediately comes into the contact with the front end surface 36b of the restricting pin 36 biased by the biasing means 39, immediately before the front end 20b of the select lever 20 is engaged with the notch 15b, an operating force occurring in the change lever rapidly increases. With the movement of the lockout lever 30 in the axial direction of the supporting pin 31, the contact piece 30b of the lockout lever 30 moves with respect to the operating rod 40a of the actuator 40.

In the state where the change lever is located at the 3-4 speed select position (neutral position in the select direction) P2 shown in (b) of Fig. 7, the front end 20b of the select lever 20 is engaged with the notch 13b at the front end of the shift piece 13a of the second fork shaft 13, and by shifting the change lever to one or the other side in the shift direction, as described above, the 3-speed gear or the 4-speed gear is set. When the vehicle is travelling at a vehicle speed not less than the predetermined vehicle speed in this state, as in the case of the 1-2 speed select position P1 except that the distance between the front end 30a and the front end 27a of the reverse restricting member 27 decreases, the front end 30a of the lockout lever 30 biased by the torsion spring 33 is inserted between the front end 27a of the reverse restricting member 27 and the front end surface 36b of the restricting pin 36 in the free state, and is stopped. When it is attempted to shift the change lever to the reverse select position PR, as in the case of the 1-2 speed select position P1, immediately before the front end 20b of the select lever 20 engages with the notch 15b, the front end 20b of the select lever 20 comes into contact with the front end 30a of the lockout lever 30 to move the front end 30a. Since the front end 30a immediately comes into contact with the front end surface 36b of the restricting pin 36 biased by the biasing means 39, the operating force occurring in the change lever rapidly increases immediately before the front end 20b of the select lever 20 engages with the notch 15b.

In the state where the change lever is located at the 5-6 speed select position P3 shown in (c) of Fig. 7, the front end 20b of the select lever 20 is engaged with the notch 14b at the front end of the shift piece 14a of the third fork shaft 14, and by shifting the change lever to one or the other side in the shift direction, as described above, the 5-speed gear or the 6-speed gear is set. When the vehicle is travelling at a vehicle speed not less than the predetermined vehicle speed in this state, as in the case of the 1-2 speed select position P1 except that the distance between the front end 30a and the front end 27a of the reverse restricting member 27 is further reduced and becomes almost 0, the front end 30a of the lockout lever 30 biased by the torsion spring 33 is inserted between the front end 27a of the reverse restricting member 27 and the front end surface 36b of the restricting pin 36 in the free state, and is stopped. When it is attempted to shift the change lever to the reverse select position PR, the front end 27a of the reverse restricting member 27 immediately comes into contact with the front end 30a of the lockout lever 30 to move the front end 30a. Since the front end 30a immediately comes into contact with the front end surface 36b of the restricting pin 36 biased by the biasing means 39, immediately before the front end 20b of the select lever 20 engages with the notch 15b, the operating force occurring in the change lever rapidly increases.

As described above, in the state where any of the 1-speed gear to 6-speed gear is set and the vehicle is travelling forward at a vehicle speed not less than the predetermined vehicle speed, when it is attempted to shift the change lever to the reverse select position PR, immediately before the front end 20b of the select lever 20 engages with the notch 15b, the operating force occurring in the change lever rapidly increases. Thus, the user can immediately recognize the misoperation that the gear shift operation to the reverse gear is performed during forward travelling at a vehicle speed not less than the predetermined vehicle speed, and stops a further operation.
On the other hand, in the state where any of the 1-speed gear to 6-speed gear is set and the vehicle is travelling forward at a vehicle speed less than the predetermined vehicle speed, by energizing the actuator 40 to cause the operating rod 40a to move forward and come into contact with the contact piece 30b, thereby rotating the lockout lever 30 against the torsion spring 33, the front end 30a of the lockout lever 30 is detached from (the contacting state) between the front end 27a of the reverse restricting member 27 and the front end surface 36b of the restricting pin 36 in the free state (refer to (d) of Fig. 7). By shifting the change lever to the reverse select position PR in this state, the front end 27a of the reverse restricting member 27 get close to the front end surface 36b of the restricting pin 36 in the free state, but does not contact the front end surface 36b. Thus, the front end 20b of the select lever 20 can lightly engage with the notch 15b of the reverse fork shaft 15 to select the reverse fork shaft 15 (refer to (e) of Fig. 7) and then, the change lever can be shifted to set the reverse shift gear.

In the case where the operating rod 40a cannot be moved at a reverse position due to a failure such as cable break of the actuator 40, even at a vehicle speed less than the predetermined vehicle speed, the operating rod 40a does not press a part of the select lever 20 [sic. lockout lever 30]. Thus, as in the case of a vehicle speed not less than the predetermined vehicle speed, the front end 30a of the lockout lever 30 does not move rearward from between the front end 27a of the reverse restricting member 27 and the restricting pin 36. Accordingly, since the front end 27a of the reverse restricting member 27 comes into contact with the front end surface 36b of the restricting pin 36 via the front end of the lockout lever 30, and the operating force occurring in the change lever rapidly increases, the gear shift operation to the reverse gear cannot be performed with a small operating force. However, by increasing the operating force applied to the change lever in the select direction, the biasing means 39 is bent (caused to be depressed), and the lockout lever 30 is moved in the axial direction of the supporting pin 31 to allow the select lever 20 to move, thereby selecting the reverse fork shaft 15 (refer to (f) of Fig. 7). Thus, the gear shift operation to the reverse gear can be performed with the increased (large) force.

In the above-mentioned exemplary embodiment, as described above, in the normal operating state, in the case where the vehicle is travelling in the forward shift gear at a vehicle speed not less than the predetermined vehicle speed, when it is attempted to shift the change lever to the reverse select position PR, immediately before the front end 20b of the select lever 20 engages with the notch 15b, the operating force occurring in the change lever rapidly increases. As a result, the user can immediately sense the misoperation that the gear shift operation to the reverse gear is performed during forward travelling at a vehicle speed not less than the predetermined vehicle speed, and stops a further operation. In the case where the vehicle is travelling in the forward shift gear at a vehicle speed less than the predetermined vehicle speed, when it is attempted to shift the change lever is shifted to the reverse select position PR, the front end 20b of the select lever 20 can lightly (with a slight-force) engage with the notch 15b of the reverse fork shaft 15 to select the reverse fork shaft 15 and then, the change lever can be shifted to set the reverse shift gear. Further, in the case where the operating rod 40a cannot be moved at the reverse position due to a failure such as circuit break of the actuator 40, although the gear shift operation to the reverse gear cannot be performed with a small operating force, the gear shift operation to the reverse gear can be performed with an incresed force.

In the exemplary embodiment as mentioned above, the shift and select shaft 11 that is selected in the rotational direction and shifted in the axial direction in cooperation with the select motion and the shift motion of the change lever is provided in parallel with the fork shafts 12 to 15. The select lever 20 is fixed to the shift and select shaft 11, and protrudes in the radial direction. Each of the fork shafts 12 to 15 is shifted in the axial direction, and the front ends of the shift pieces 12a to 15a protruding from the fork shafts 12 to 15, respectively, in the radial direction are located on (along) an arc centered at the shift and select shaft 11. In the state where each of the fork shafts 12 to 15 are located at the neutral position in the shift direction, the U-shaped notches 12b to 15b formed at the front ends of the shift pieces 12a to 15a are aligned along the above-mentioned arc, and can be selectively engaged with the front end 20b of the select lever 20 swinging in the select direction, and the reverse restricting member 27 is fixed to the shift and select shaft 11. With such configuration, since both of the select lever 20 for actuating the fork shafts 12 to 15 and the reverse restricting member 27 for restricting the gear shift operation to the reverse gear during forward travelling at a vehicle speed not less than the predetermined vehicle speed are fixed to the shift and select shaft 11, it is possible to provide the misoperation preventing device in the manual transmission, which has a simplified configuration and achieves a reliable operation.

In the exemplary embodiment as mentioned above, there are further provided the cylinder part 21 that is formed integrally with the select lever 20 and extends in the radial direction, the piston member 22 fitted into the inner surface of the cylinder part 21 to be slidable in the axial direction, the roller 22a rotatably supported by a front end of the piston member 22 protruding from the cylinder part 21 via the pivoted pin 22b parallel to the shift and select shaft 11, the plate-like camplate 24 that has one end rotatably pivoted by the shift and select shaft 11, extends in the radial direction, has a central surface in the thickness direction arranged so as to substantially correspond to the center line of the cylinder part 21 and the opening 24b for swingingly receiving the cylinder part 21, the piston member 22, and the roller 22a, and is engaged with the casing 10 so as to allow only the movement along the shift and select shaft 11, and the spring 23 for biasing the piston member 22 outward relative to the cylinder part 21 and elastically pressing the roller 22a onto the cam surface 24c formed in the opening 24b on the opposite side to the shift and select shaft 11. The cam surface 24c has the largest distance from the center of the shift and select shaft 11 at the neutral position in the select direction, which is located within the moving range of the roller 22a, and has mutually opposed inclined angles on the both sides across the neutral position, and the reverse restricting member 27 is formed integrally with the cylinder part 21. With such configuration, since the three members: the select lever 20, the cylinder part 21, and the reverse restricting member 27 are integrally formed and fixed to the shift and select shaft 11, it is possible to reduce the number of components of the select return means 26 for returning the select lever 20 to the neutral position in the select direction, as well as to provide the misoperation preventing device in the manual transmission with more reliable operation.

In the transmission for switching between forward and rearward movement by the operation of the select lever 20, the misoperation preventing device in the transmission according to the above-mentioned exemplary embodiment includes the reverse restricting member 27 swinging integrally with the select lever 20, the actuator 40 selectively allowed to actuate in dependence to the vehicle speed at forward select, the operating rod 40a operated by driving of the actuator 40 against the elastic force, the restricting pin 36 supported so as to freely move forward or rearward while receiving the elastic force acting in the forwardly direction, and the lockout lever 30 supported so as to be movable in the forward and rearward direction of the restricting pin 36, and freely oscillate around the swinging axis (supporting cylindrical member 32) parallel to the forward and rearward direction of the restricting pin 36 between the first position (refer to 30a in Fig. 4) and the second position (refer to the two-dot chain line 30A in Fig. 4).
At the first position, the lockout lever 30 is inserted between the restricting pin 36 and the reverse restricting member 27 and is in slide contact with the pin 36 and the member 27, and the select lever 20 upon selecting rearward movement can be coupled to the restricting pin 36 via the reverse restricting member 27 and be biased by the operated operating rod 40a.
At the second position, the lockout lever 30 is biased by the operating rod 40a to swing away from the first position, thereby being detached from (the contact state) between the restricting pin 36 and the reverse restricting member 27.

Referring to, especially, Fig. 5, the lockout lever 30 biases the restricting pin 36 to move rearward against the elastic force of the springs 38a, 38b at the first position with the swinging of the select lever 20 in the reverse select direction.

Referring to, especially, Fig. 5, the misoperation preventing device further includes a spring (torsion spring 33) that biases the lockout lever 30 toward the first position as well as in a direction in which the restricting pin 36 advances.

Referring to, especially, Fig. 5, the restricting pin and the swinging (pivoting) axis of the lockout lever are placed in juxtaposition such that the forward and rearward direction of the restricting pin 36 is parallel to the swinging axis of the lockout lever.

Across (straddling) the swinging axis (shift and select shaft 11) of the select lever 20, apart (front end 20b) selectively engaged with each of the forward fork shafts 12 to 14 or the reverse fork shaft 15 is formed on one side of the select lever 20, and the reverse restricting member 27 is integrated with the other side of the select lever 20.

A part (front end 30a) of the lockout lever 30, which is in slide contact with the reverse restricting member 27, has a notch 30a for detaching the lockout lever 30 from the reverse restricting member 27.

At forward select, the actuator 40 is allowed to be actuated at a vehicle speed less than the predetermined vehicle speed, and is not allowed to be actuated at a vehicle speed not less than the predetermined vehicle speed.

Disclosure of related technical literatures such as the above-mentioned Patent Literature is incorporated herein by reference. Within the ambit of the whole disclosure (including CLAIMS) of the present invention, and based on the basic technical concepts, the exemplary embodiment and the operating examples can be changed and adjusted. Within the scope of CLAIMS of the present invention, various combinations and selection of various elements (elements in each claim, elements in each example, and elements in each drawing) can be made. That is, as a matter of course, the present invention includes various variations and modifications that can be made by one skilled in the art according to the entire technical concept.

### INDUSTRIAL APPLICABILITY

The misoperation preventing device according to the present invention is used in the transmission of a vehicle and the like and, for example, is preferably used in a manually-operated transmission and a partially-automated transmission.

### REFERENCE SIGNS LIST

10: Casing
11: Shift and select shaft
12 to 14: Forward fork shaft
12a to 15a: Shift piece
12b to 15b: Notch
15: Reverse fork shaft
20: Select lever
21: Cylinder part
22: Piston member
22a: Roller
22b: Pivoted pin
23: Spring
24: Cam plate
24b: Opening
24c: Cam surface
27: Reverse restricting member
27a: Front end
30: Lockout lever
30a: Front end
30b: Part (Contact piece)
31: Supporting pin
33: Spring (Torsion spring)
36: Restricting pin
36a: Part (Flange)
36b: Front end surface
39: Biasing means
40: Actuator
40a: Operating rod

## Claims

1. A misoperation preventing device of a manual transmission for automobile etc., comprising a plurality of forward fork shafts arranged in parallel with each other, each forward fork shaft switching a respective forward shift gear, and a reverse fork shaft switching a reverse shift gear; a select lever sequentially selecting one of the forward and reverse fork shafts in cooperation with a select motion of a manual change lever, the select lever being moved between select positions; and a casing supporting each of such members, wherein the fork shaft selected by the select lever is activated in cooperation with a shift motion of the manual change lever to switch between forward and reverse gears;
the misoperation preventing device comprising:
a reverse restricting member moved in relation to the select lever, the reverse restricting member having a front end that gets closest to a part of an inner surface of the casing when the select lever is located at a reverse select position at which the reverse fork shaft is selected, and is sequentially separated from said part of the inner surface when the select lever is sequentially moved to each of other select positions;
a restricting pin engaged with said part of the inner surface of the casing so as to be slidable along a tangential direction of a movement track of the front end of the reverse restricting member in the vicinity of the position closest to said part, the restricting pin being elastically biased toward the front end of the reverse restricting member and partially contacting a part of the casing in a free state to be stopped; and
a lockout lever supported by the casing so as to be rotatable around a supporting pin extending parallel to said restricting pin and axially slidable, the lockout lever extending orthogonal to be supporting pin and being biased around the supporting pin by a spring interposed between the lockout lever and the casing;
wherein, in a state where the select lever is not located at the reverse select position, a front end part of the lockout lever biased by the spring is configured to be inserted between the front end of the reverse restricting member and a front end surface of said restricting pin in a free state at least near said restricting pin; and
the misoperation preventing device further comprising an actuator having an operating rod that can detachably contact with a part of the lockout lever; said actuator being actuated at a vehicle speed less than a predetermined vehicle speed to cause the operating rod to contact with the part of the lockout lever and the front end part of the lockout lever to be detached from a position between the front end of the reverse restricting member and the front end surface of said restricting pin in the free state against a biasing force of the spring.

2. The misoperation preventing device of a manual transmission according to claim 1, further comprising:
a shift and select shaft arranged in parallel with each of the fork shafts, the shift and select shaft being selected in a rotational direction and axially shifted in cooperation with select motion and shift motion of said change lever;
wherein said select lever is fixed to the shift and select shaft so as to protrude radially, each of the fork shafts is axially shifted, front ends of shift pieces protruding radially are located on an arc centered at the shift and select shaft, and in case where each of the fork shafts is located at a neutral position in the shift direction U-shaped notches formed in respective front ends of the shaft pieces are aligned along said arc, and are selectively engageable with the front end of the select lever swinging in the select direction, and said reverse restricting member is fixed to the shift and select shaft.

3. The misoperation preventing device of a manual transmission according to claim 2, further comprising:
a cylinder part formed integrally with the select lever, so as to extend radially; a piston member engaged with an inner surface of the cylinder part so as to be slidable axially; a roller rotatably supported by a front end of the piston member, which protrudes from the cylinder part, via a pivoted pin lying parallel to the shift and select shaft; a plate-like cam plate that has one end rotatably supported by the shift and select shaft, extends radially, has a central surface in a thickness direction arranged so as to substantially correspond to a center line of the cylinder part, and an opening for swingingly accommodating the cylinder part, the piston member, and the roller, and is engaged with the casing so as to allow only movement along the shift and select shaft; and a spring for biasing the piston member outward relative to the cylinder part and elastically pressing the roller onto a cam surface formed in the opening on the opposite side to the shift and select shaft;
wherein the cam surface has a largest distance from a center of the shift and select shaft at a neutral position in the select direction, which is located in the moving range of the roller, and has opposed inclined angles on the both sides across the neutral position, and the reverse restricting member is formed integrally with the cylinder part.

4. A misoperation preventing device used in a transmission for switching between forward movement and reverse movement by operation of a select lever, the misoperation preventing device comprising:
a reverse restricting member swinging integrally with the select lever;
an actuator selectively allowed to actuate according to vehicle speed at forward select;
an operating rod operated by driving of the actuator against an elastic force;
a restricting pin supported so as to freely move forward or rearward while receiving the elastic force acting in a forward direction; and
a lockout lever supported so as to be movable in the forward and rearward direction of the restricting pin, the lockout lever freely swinging around the swinging axis extending parallel to the forward and rearward direction of the restricting pin at least between a first position and a second position;
wherein, at the first position, the lockout lever is inserted between the restricting pin and the reverse restricting member so as to be in slide contact with the pin and the member, and the select lever that selects rearward movement can be coupled to the restricting pin via the reverse restricting member and be biased by the operated operating rod, and
wherein, at the second position, the lockout lever is biased by the operating rod to swing from the first position, thereby being detached from a position between the restricting pin and the reverse restricting member.

5. The misoperation preventing device according to claim 4, wherein the lockout lever biases the restricting pin to move rearward against an elastic force at the first position along with swinging of the select lever toward a reverse select direction.

6. The misoperation preventing device according to claim 4, further comprising a spring biasing the lockout lever toward the first position as well as in a direction in which the restricting pin advances.

7. The misoperation preventing device according to claim 4, wherein the restricting pin and a swinging axis of the lockout lever are placed in juxtaposition such that the forward and rearward direction of the restricting pin is parallel to the swinging axis of the lockout lever.

8. The misoperation preventing device according to claim 4, wherein, across a swinging axis of the select lever, a part selectively engaged with a forward fork shaft or the reverse fork shaft is formed on one side of the select lever, and the reverse restricting member is integrated with the other side of the select lever.

9. The misoperation preventing device according to claim 4, wherein a part that is in slide contact with the reverse restricting member of the lockout lever has a notch for detaching the lockout lever from the reverse restricting member.

10. The misoperation preventing device according to claim 4, wherein, at forward select, said actuator is allowed to be driven at a vehicle speed less than a predetermined vehicle speed, and is not allowed to be driven at a vehicle speed not less than the predetermined vehicle speed.

11. A transmission provided with the misoperation preventing device according to any one of claims 1 to 10.
